# EUROPÄISCHE PATENTSCHRIFT

(11) **EP 4 217 552 B1**
(45) Veröffentlichungstag und Bekanntmachung des Hinweises auf die Patenterteilung: **17.07.2024**
(21) Anmeldenummer: 21773507.5
(22) Anmeldetag: 03.09.2021
(51) Int. Cl.: E04G 11/28, B66F 1/08, E04G 11/24

(54) **SELBSTKLETTERSYSTEM FÜR EINEN BETONBAUKÖRPER UND SELBSTKLETTERVERFAHREN**
SELF-CLIMBING SYSTEM FOR A CONCRETE STRUCTURAL BODY, AND SELF-CLIMBING METHOD
SYSTÈME AUTO-GRIMPANT POUR UN CORPS STRUCTURAL EN BÉTON ET PROCÉDÉ AUTO-GRIMPANT

(30) Priorität: 22.09.2020 DE 102020124646
(43) Veröffentlichungstag der Anmeldung: 02.08.2023
(73) Patentinhaber: PERI SE, 89264 Weißenhorn (DE)
(72) Erfinder: BRUNNER, Werner, 89264 Weißenhorn (DE); ZWERENZ, Andre, 89264 Weißenhorn (DE)
(74) Vertreter: K & H Bonapat Patentanwälte Koch · von Behren & Partner mbB
(86) Internationale Anmeldenummer: PCT/EP2021/074401
(87) Internationale Veröffentlichungsnummer: WO 2022/063547

(56) Entgegenhaltungen:
- EP-A1- 2 995 749
- US-A- 5 630 482

## Beschreibung

Die vorliegende Erfindung betrifft ein Selbstklettersystem für einen Betonbaukörper, mit einer Kletterschiene und einem entlang der Kletterschiene axial verfahrbaren Kletterwerk.

Die vorliegende Erfindung betrifft des Weiteren ein Verfahren zum Klettern eines Kletterwerks an einer an einem Betonbaukörper angeordneten Kletterschiene.

### Stand der Technik

Bei automatischen Selbstklettersystemen ist der Klettermechanismus in der Lage, sowohl eine Kletterschiene nach oben zu klettern als auch ein mit dem Klettermechanismus verbindbares Klettergerüst nach oben zu klettern. Mithilfe eines schaltbaren Klettermechanismus werden zunächst die Kletterschienen nach oben in den frischen Betonierabschnitt geklettert, zwischen Wand und Schalung verfahren und anschließend das Traggerüst mit Kletterwerk nach oben geklettert.

Bei einem Klettern der Kletterschiene sitzt ein Stellelement eines Kletterkopfes unter einem Rastklotz der Kletterschiene. Beim Klettern des Traggerüstes sitzt das Stellelement des Kletterkopfes auf einem Rastklotz der Kletterschiene auf. Beim Fahren in Endstellung werden Nocken in den Kletterköpfen über Schaltkulissen auf der Kletterschiene geschalten und nehmen dabei die Stellelemente mit, die dann je nach Einstellung wieder auf bzw. unter den Rastklötzen der Kletterschiene einrasten.

Ein Hydraulikaggregat besitzt eine Steuerung, mit der die Zylinder aus- und eingefahren werden können. Damit das Traggerüst nach oben geklettert werden kann, muss die Schiene bereits vorher nach oben geklettert worden sein und ortsfest fixiert werden.

Nachteilhaft an dieser Lösung ist, dass die Kletterschiene eine Vielzahl von Schaltkulissen aufweisen muss, um die Schaltvorgänge zum Positionieren der Stellelemente der jeweiligen Kletterköpfe einzuleiten.

EP 0 681 635 B1 oderUS5630482A offenbart eine Selbstklettervorrichtung für ein Klettergerüst mit mindestens einem Linearantrieb, der zwischen mindestens einer Verschiebekonsole und mindestens einer in Verschieberichtung verlaufenden Tragschiene eine Relativbewegung erzeugt, insbesondere wenn der Linearantrieb abwechslungsweise einen Gerüstabschnitt und nach Befestigung an der Wand und Lösen der Befestigung der Tragschiene diese um einen Arbeitsabschnitt verschiebt.

Die Verbindung zwischen dem Linearantrieb und der Tragschiene ist durch im Abstand voneinander angeordneten Kletterköpfen hergestellt.

Ein Sperrglied wird hierbei bei der Relativbewegung in einer Richtung über den Sperrnocken hinweggehoben, in der anderen Bewegungsrichtung läuft dieses auf die Sperrnocke auf, sodass der eine Kletterkopf diese Relativbewegung sperrend mit der Tragschiene formschlüssig verbunden ist, während am anderen Kletterkopf eine die Sperrnocken überwindende Relativbewegung stattfindet.

Demzufolge besteht ein Bedarf, bestehende Selbstklettersysteme und Verfahren dahingehend zu verbessern, ein einfacheres Konzept zum Schalten von Stellelementen bei automatischen Klettersystemen bereitzustellen, welches zudem fehlerunanfälliger ist.

Es ist daher Aufgabe der Erfindung, ein Selbstklettersystem und ein entsprechendes Verfahren anzugeben, welche ein vereinfachtes, fehlerunanfälligeres Schalten von Stellelementen bei automatischen Klettersystemen ermöglichen.

### Offenbarung der Erfindung

Die Aufgabe wird erfindungsgemäß gelöst durch ein Selbstklettersystem für einen Betonbaukörper mit einer Kletterschiene und einem entlang der Kletterschiene axial verfahrbaren Kletterwerk nach Patentanspruch 1 sowie ein Verfahren zum Klettern eines Kletterwerks an einer an einem Betonbaukörper angeordneten Kletterschiene nach Patentanspruch 15.

Die Erfindung betrifft ein Selbstklettersystem für einen Betonbaukörper, mit einer Kletterschiene und einem entlang der Kletterschiene axial verfahrbaren Kletterwerk, welches einen ersten Kletterkopf, einen zweiten Kletterkopf und einen den ersten Kletterkopf mit dem zweiten Kletterkopf verbindenden Linearantrieb aufweist, wobei der erste Kletterkopf und der zweite Kletterkopf jeweils ein zwischen einer Kletterstellung und einer Raststellung, insbesondere des Kletterwerks, stellbares Stellelement aufweisen, wobei das Stellelement des ersten Kletterkopfes und das Stellelement des zweiten Kletterkopfes durch eine Steuerstange verbunden sind, und wobei die Steuerstange dazu ausgebildet ist, in vorgegebenen Positionen des Linearantriebs zumindest eines der Stellelemente mit einem Drehmoment zu beaufschlagen.

Die Erfindung betrifft des Weiteren ein Verfahren zum Klettern eines Kletterwerks an einer an einem Betonbaukörper angeordneten Kletterschiene. Das Verfahren umfasst ein Bereitstellen eines ersten Kletterkopfes, eines zweiten Kletterkopfes und eines den ersten Kletterkopf mit dem zweiten Kletterkopf verbindenden Linearantriebs.

Das Verfahren umfasst des Weiteren ein Bereitstellen des ersten Kletterkopfes und des zweiten Kletterkopfes mit jeweils einem zwischen einer Kletterstellung und einer Raststellung, insbesondere des Kletterwerks, stellbaren Stellelement, wobei das Stellelement des ersten Kletterkopfes und das Stellelement des zweiten Kletterkopfes durch eine Steuerstange verbunden sind.

Das Verfahren umfasst darüber hinaus ein Beaufschlagen zumindest eines der Stellelemente mit einem Drehmoment in vorgegebenen Positionen des Linearantriebs durch die Steuerstange.

Eine Idee der vorliegenden Erfindung ist es, durch die Steuerung der Stellelemente mittels der Steuerstange auf die Steuerkulissen an der Kletterschiene zu verzichten. Es treten somit weniger Beschädigungen auf und die Betätigung des Rastmechanismus funktioniert reibungsunabhängig mit geringeren Fehlfunktionen. Ferner sind die Rückstellkräfte bei dieser Betätigungsart geringer und belasten die Kulissenlagerung weniger.

Zudem sind die Kletterschienen aufgrund nicht mehr benötigter Steuerkulissen einfacher und günstiger zu fertigen.

Darüber hinaus ist die erfindungsgemäße Lösung ebenfalls in Kombination mit existierenden Kletterschienen anwendbar, mit welchen das erfindungsgemäße Kletterwerk kompatibel ist. Durch die erfindungsgemäße Lösung ergeben sich somit in vorteilhafter Weise deutlich weniger Verschleißerscheinungen an Kletterwerk und Kletterschiene.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung ist vorgesehen, dass das Stellelement des ersten Kletterkopfes und das Stellelement des zweiten Kletterkopfes bei durch Axialbewegung des Linearantriebs bedingten Überfahrens eines Rastklotzes einer Mehrzahl von auf der Kletterschiene angeordneten Rastklötzen von der Raststellung, in welcher das Stellelement zumindest abschnittsweise in der Ebene des Rastklotzes angeordnet ist, in die Kletterstellung, in welcher das Stellelement außerhalb der Ebene des Rastklotzes angeordnet ist, bewegbar ist. Das Zusammenwirken des zumindest einen Stellelements mit dem auf der Kletterschiene angeordneten Rastklotz bewirkt somit in vorteilhafter Weise ein Schalten des jeweiligen Stellelements zwischen Kletterstellung und Raststellung.

Gemäß einer weiteren bevorzugten Weiterbildung ist vorgesehen, dass die Steuerstange ein Außenrohr und ein aus dem Außenrohr ein- und ausfahrbares Innenrohr oder eine Welle aufweist, wobei die Steuerstange bei Bewegen des Linearantriebs in eine erste axiale Endposition, insbesondere in eine vollständig ausgefahrene Position, dazu ausgebildet ist, einen Schaltimpuls zu erzeugen um das in Kletterstellung angeordnete Stellelement des ersten Kletterkopfes oder des zweiten Kletterkopfes von der Kletterstellung in die Raststellung zu bewegen.

Die Steuerstange ermöglicht somit in vorteilhafter Weise ein Einstellen bzw. Positionieren eines jeweiligen Stellelements in die Raststellung.

Gemäß einer weiteren bevorzugten Weiterbildung ist vorgesehen, dass ein Hub des Linearantriebs im Wesentlichen identisch oder mit einer Abweichung von bis zu 15% zu einem Hub der Steuerstange ist, wobei das Kletterwerk bei Erreichen einer ersten axialen Endposition der Steuerstange dazu ausgebildet ist, das in Kletterstellung angeordnete Stellelement des ersten Kletterkopfes oder des zweiten Kletterkopfes von der Kletterstellung in die Raststellung zu bewegen. Die Steuerstange kann somit in vorteilhafter Weise bei einer Bewegung des Linearantriebs mitbewegt werden, wobei die Steuerstange ihre Steuerwirkung lediglich an jeweiligen Endpositionen des Hubs des Linearantriebs durchführt.

Gemäß einer weiteren bevorzugten Weiterbildung ist vorgesehen, dass die Steuerstange bei Bewegen des Linearantriebs in eine zweite axiale Endposition, insbesondere in eine vollständig eingefahrene Position, dazu ausgebildet ist, das in Kletterstellung angeordnete Stellelement des ersten Kletterkopfes oder des zweiten Kletterkopfes von der Kletterstellung in die Raststellung zu bewegen.

Die Steuerstange weist somit in vorteilhafter Weise sowohl in der ersten axialen Endposition als auch in der zweiten axialen Endposition des Steuerzylinders eine entsprechende Stellwirkung zum Verstellen des jeweiligen Kletterkopfes von der Kletterstellung in die Raststellung auf.

Gemäß einer weiteren bevorzugten Weiterbildung ist vorgesehen, dass das Kletterwerk bei Erreichen der zweiten axialen Endposition der Steuerstange dazu ausgebildet ist, das in Kletterstellung angeordnete Stellelement des ersten Kletterkopfes oder des zweiten Kletterkopfes von der Kletterstellung in die Raststellung zu bewegen. Die Steuerstange kann somit in vorteilhafter Weise bei einer Bewegung des Linearantriebs mitbewegt werden, wobei die Steuerstange ihre Steuerwirkung lediglich an jeweiligen Endpositionen des Hubs des Linearantriebs durchführt.

Gemäß einer weiteren bevorzugten Weiterbildung ist vorgesehen, dass das Stellelement des ersten Kletterkopfes und das Stellelement des zweiten Kletterkopfes an einer Drehachse am jeweiligen Kletterkopf angeordnet ist, und wobei die Steuerstange am jeweiligen Stellelement exzentrisch zur Drehachse angeordnet ist. Aufgrund der exzentrischen Anordnung bzw. Anbindung der Steuerstange an das jeweilige Stellelement kann die Steuerstange somit in vorteilhafter Weise ihre Steuerwirkung des Stellelements durchführen.

Gemäß einer weiteren bevorzugten Weiterbildung ist vorgesehen, dass das Kletterwerk dazu ausgebildet ist, dass sich bei Betrieb des Kletterwerks in Kletterstellung, d.h. in Stellung Schiene klettern oder Konsole klettern, das Stellelement des ersten Kletterkopfes oder des zweiten Kletterkopfes an einem an der Kletterschiene angeordneten Rastklotz abstützt, und wobei das andere Stellelement durch die Steuerstange betätigbar ist. Im Kletterbetrieb ist somit in vorteilhafter Weise jeweils eines der Stellelemente durch die Steuerstange betätigbar.

Gemäß einer weiteren bevorzugten Weiterbildung ist vorgesehen, dass das Außenrohr und das Innenrohr oder die Welle der Steuerstange an einem Hubende ein Federelement, insbesondere eine Spiralfeder, aufweisen, welches die Betätigung des Stellelements des ersten Kletterkopfes und/oder des zweiten Kletterkopfes einleitet. Eine Länge der Federelemente ist in vorteilhafter Weise so abgestimmt, dass durch Toleranzen keine Beschädigung der Steuerstange auftritt und ein Umlegen der Schaltpunkte von einem Schiene-Klettern-Modus auf einen Konsole-Klettern-Modus möglich ist.

Gemäß einer weiteren bevorzugten Weiterbildung ist vorgesehen, dass das Innenrohr, insbesondere am Hubende, zumindest abschnittsweise ein Außengewinde aufweist, an dessen Ende eine Mutter angeordnet ist, wobei die Mutter einen Anschlag bildet, welcher an einem Gegenanschlag, insbesondere einer Durchmesserreduzierung, des Außenrohrs anschlägt.

Somit kann in vorteilhafter Weise ein durch die Mutter einstellbarer Endanschlag des Steuerrohrs vorgesehen werden.

Gemäß einer weiteren bevorzugten Weiterbildung ist vorgesehen, dass die Steuerstange einen Griff aufweist, welcher bei Betätigung, insbesondere durch einen Benutzer, dazu ausgebildet ist, das Stellelement des ersten Kletterkopfes oder des zweiten Kletterkopfes zwischen Kletterstellung und Raststellung zu bewegen. Somit ist das Kletterwerk in vorteilhafter Weise dazu ausgebildet, bei Bedarf jederzeit durch einen Benutzer von dem Schiene-Klettern-Modus in den Konsole-Klettern-Modus umgestellt zu werden.

Gemäß einer weiteren bevorzugten Weiterbildung ist vorgesehen, dass der Linearantrieb durch einen Stellzylinder ausgebildet ist, welcher eine in einem Zylinder axial verstellbare Kolbenstange aufweist, wobei die Kolbenstange an einem axialen Endabschnitt mit dem ersten Kletterkopf verbunden ist, und wobei der Zylinder an einem axialen Endabschnitt mit dem zweiten Kletterkopf verbunden ist. Somit kann eine axiale Verfahrbarkeit des ersten Kletterkopfes und eine axiale Fixierbarkeit des zweiten Kletterkopfes erreicht werden.

Gemäß einer weiteren bevorzugten Weiterbildung ist vorgesehen, dass das Stellelement des ersten Kletterkopfes und das Stellelement des zweiten Kletterkopfes jeweils im Wesentlichen sternförmig ausgebildet ist, wobei das Stellelement eine radial ausgerichtete erste Flanke, eine radial ausgerichtete zweite Flanke und eine radial ausgerichtete dritte Flanke aufweist.

Gemäß einer weiteren bevorzugten Weiterbildung ist vorgesehen, dass die Steuerstange mit der ersten Flanke des Stellelements des ersten Kletterkopfes und des Stellelements des zweiten Kletterkopfes verbunden ist, und wobei die zweite Flanke der Stellelemente dazu ausgebildet ist, in der Raststellung des Kletterwerks auf dem Rastklotz aufzuliegen.

Gemäß einer weiteren bevorzugten Weiterbildung ist vorgesehen, dass das Stellelement des ersten Kletterkopfes und das Stellelement des zweiten Kletterkopfes bei durch Axialbewegung des Linearantriebs bedingten Überfahrens eines Rastklotzes einer Mehrzahl von auf der Kletterschiene angeordneten Rastklötzen von der Raststellung, in welcher das Stellelement zumindest abschnittsweise in der Ebene des Rastklotzes angeordnet ist, in die Kletterstellung, in welcher das Stellelement außerhalb der Ebene des Rastklotzes angeordnet ist, bewegt wird. Das Zusammenwirken des zumindest einen Stellelements mit dem auf der Kletterschiene angeordneten Rastklotz bewirkt somit in vorteilhafter Weise ein Schalten des jeweiligen Stellelements zwischen Kletterstellung und Raststellung.

Gemäß einer weiteren bevorzugten Weiterbildung ist vorgesehen, dass die Steuerstange bei Bewegen des Linearantriebs in eine erste axiale Endposition, insbesondere in eine vollständig eingefahrene oder ausgefahrene Position einen Schaltimpuls erzeugt um das in Kletterstellung angeordnete Stellelement des ersten Kletterkopfes oder des zweiten Kletterkopfes von der Kletterstellung in die Raststellung zu bewegen. Die Steuerstange ermöglicht somit in vorteilhafter Weise ein Einstellen bzw. Positionieren eines jeweiligen Stellelements in die Raststellung.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung, sofern diese in den Schutzumfang der Erfindung fallen, welcher nur durch die beigefügten Ansprüche definiert wird.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1 bis Fig. 9: eine schematische Darstellung eines Selbstklettersystems für einen Betonbaukörper gemäß einer bevorzugten Ausführungsform der Erfindung; und
- Fig. 10: ein Ablaufdiagramm eines Verfahrens zum Klettern eines Kletterwerks gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

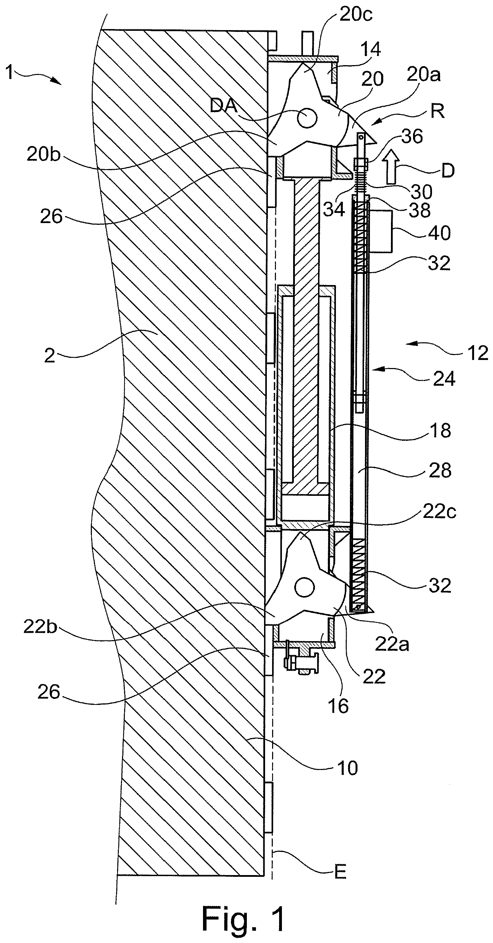

Fig. 1 zeigt eine schematische Darstellung eines Selbstklettersystems für einen Betonbaukörper gemäß einer bevorzugten Ausführungsform der Erfindung.

Das Selbstklettersystem 1 weist eine Kletterschiene 10 und ein entlang der Kletterschiene axial verfahrbares Kletterwerk 12 auf. Das Kletterwerk 12 weist einen ersten Kletterkopf 14, einen zweiten Kletterkopf 16 und einen den ersten Kletterkopf 14 mit dem zweiten Kletterkopf 16 verbindenden Linearantrieb 18 auf.

Der erste Kletterkopf 14 und der zweite Kletterkopf 16 weisen jeweils ein zwischen einer Kletterstellung K und einer Raststellung R, insbesondere des Kletterwerks 12, stellbares Stellelement 20, 22 auf. Das Stellelement 20 des ersten Kletterkopfes 14 und das Stellelement 22 des zweiten Kletterkopfes 16 sind durch eine Steuerstange 24 verbunden.

Die Steuerstange 24 ist dazu ausgebildet, in vorgegebenen Positionen des Linearantriebs 18 eines der Stellelemente 20, 22 mit einem Drehmoment D zu beaufschlagen, um das jeweilige Stellelement 20, 22 zu drehen.

Die Stellelemente 20, 22 sind in Seitenansicht im Wesentlichen sternförmig ausgebildet, wobei das Stellelement 20 des ersten Kletterkopfes 14 und das Stellelement 22 des zweiten Kletterkopfes 16 jeweils an ihrer Drehachse DA am jeweiligen Kletterkopf 14, 16 angeordnet bzw. mit diesem verbunden sind. Die Steuerstange 24 ist am jeweiligen Stellelement 20, 22 exzentrisch zur Drehachse angeordnet.

Die in der vorliegenden Ausführungsform im Wesentlichen sternförmig ausgebildeten Stellelemente 20, 22 sind mit der Steuerstange 24 an einen Endabschnitt eines sich verjüngenden Vorsprungs bzw. Arms des jeweiligen Stellelements angeordnet.

Alternativ können die Stellelemente 20, 22 eine andere geeignete Form aufweisen. Beispielhafte geeignete Formgebungen sind kreisförmig, hohlkreisförmig, dreieckig oder quaderförmig.

Die Steuerstange 24 ist zweiteilig ausgebildet und weist ein Außenrohr 28 und ein aus dem Außenrohr 28 ein- und ausfahrbares Innenrohr 30 auf. Das Innenrohr 30 ist in dem Außenrohr 28 frei bewegbar innerhalb eines vorgegebenen Hubs. Alternativ kann anstelle des Innenrohrs 30 beispielsweise eine Welle vorgesehen sein.

Das Außenrohr 28 und das Innenrohr 30 oder alternativ die Welle der Steuerstange 24 weisen an einem Hubende ferner ein Federelement 32, insbesondere eine Spiralfeder, auf. Das Federelement 32 leitet die Betätigung des Stellelements 20, 22 des ersten Kletterkopfes 14 und/oder des zweiten Kletterkopfes 16 ein.

Darüber hinaus weist das Innenrohr 30, insbesondere am Hubende, zumindest abschnittsweise ein Außengewinde 34 auf, an dessen Ende eine Mutter 36 angeordnet ist.

Die Mutter 36 bildet einen Anschlag, welcher an einem Gegenanschlag 38, insbesondere einer Durchmesserreduzierung des Außenrohrs 28, anschlägt.

In der vorliegenden Darstellung stützen sich sowohl das Stellelement 20 des ersten Kletterkopfes 14 als auch das Stellelement 22 des zweiten Kletterkopfes 16 jeweils auf einem Rastklotz 26 ab.

Das Stellelement 20 des ersten Kletterkopfes 14 und das Stellelement 22 des zweiten Kletterkopfes 16 ist jeweils im Wesentlichen sternförmig ausgebildet, wobei das Stellelement 20, 22 eine radial ausgerichtete erste Flanke 20a, 22a, eine radial ausgerichtete zweite Flanke 20b, 22b und eine radial ausgerichtete dritte Flanke 20c, 22c aufweist.

Die Steuerstange 24 ist mit der ersten Flanke 20a, 22a des Stellelements 20 des ersten Kletterkopfes 14 und des Stellelements 22 des zweiten Kletterkopfes 16 verbunden. Die zweite Flanke 20b, 22b der Stellelemente 20, 22 ist dazu ausgebildet, in der Raststellung R des Kletterwerks 12 auf dem Rastklotz 26 aufzuliegen.

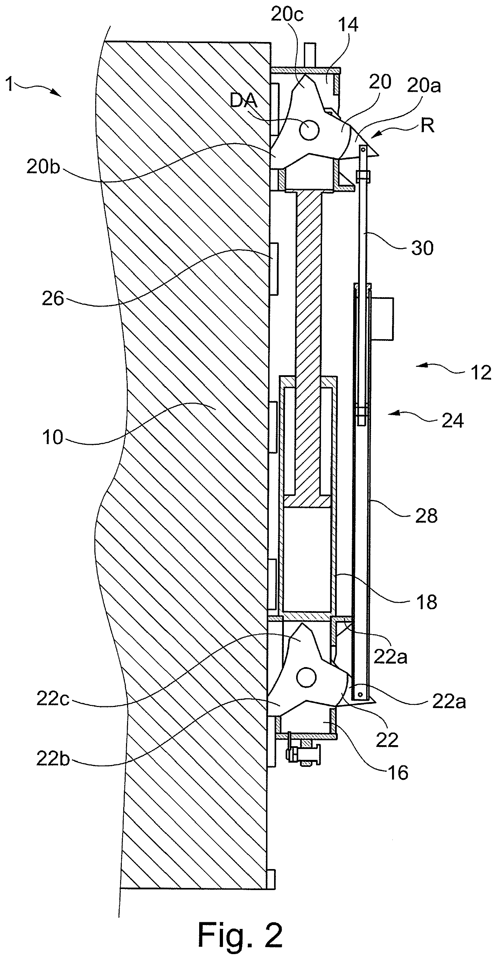

Fig. 2 zeigt eine schematische Darstellung eines Selbstklettersystems für einen Betonbaukörper gemäß der bevorzugten Ausführungsform der Erfindung. Der Linearantrieb 18 ist in der vorliegenden Darstellung etwas weiter als in Fig. 1 ausgefahren, sodass das Stellelement 20 des ersten Kletterkopfes 14 von dem Rastklotz 26 abgehoben ist, jedoch immer noch in Raststellung R angeordnet ist. Das Stellelement 22 des zweiten Kletterkopfes 16 stützt sich nach wie vor auf einem Rastklotz 26 der Mehrzahl von Rastklötzen ab.

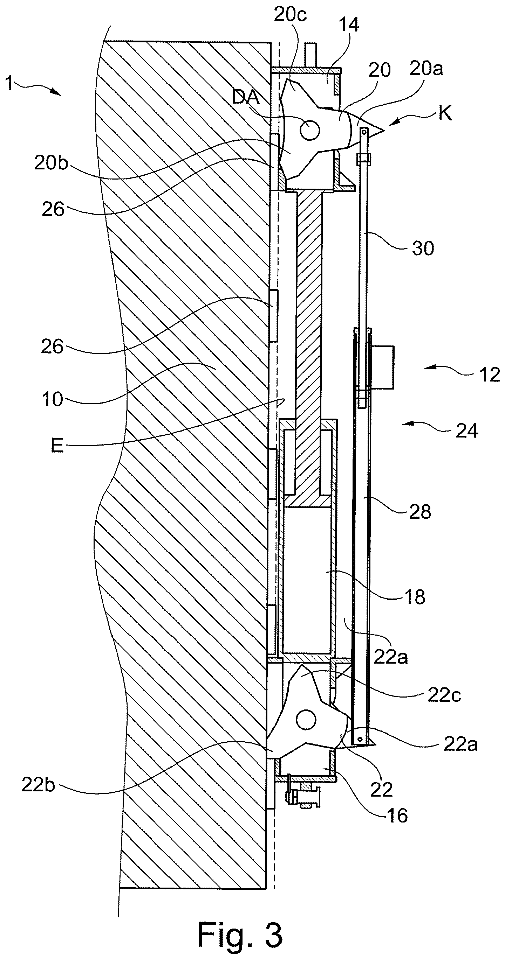

Fig. 3 zeigt eine schematische Darstellung eines Selbstklettersystems für einen Betonbaukörper gemäß der bevorzugten Ausführungsform der Erfindung.

In der vorliegenden Darstellung ist der Linearantrieb 18 ein Stück weit weiter als in Fig. 2 ausgefahren. Durch Kontakt eines Arms des sternförmig ausgebildeten Stellelements 20 des ersten Kletterkopfes 14 mit einem Rastklotz 26 wurde das Stellelement 20 von der Raststellung R in die Kletterstellung K bewegt.

Das Stellelement 20 des ersten Kletterkopfes 4 dreht sich dabei um seine Drehachse DA, an welcher das Stellelement 20 an dem ersten Kletterkopf 14 gelagert ist.

Das Stellelement 20 des ersten Kletterkopfes 14 ist somit nunmehr nicht mehr in der Ebene E des Rastklotzes 26, sondern außerhalb der Ebene E des Rastklotzes 26 angeordnet.

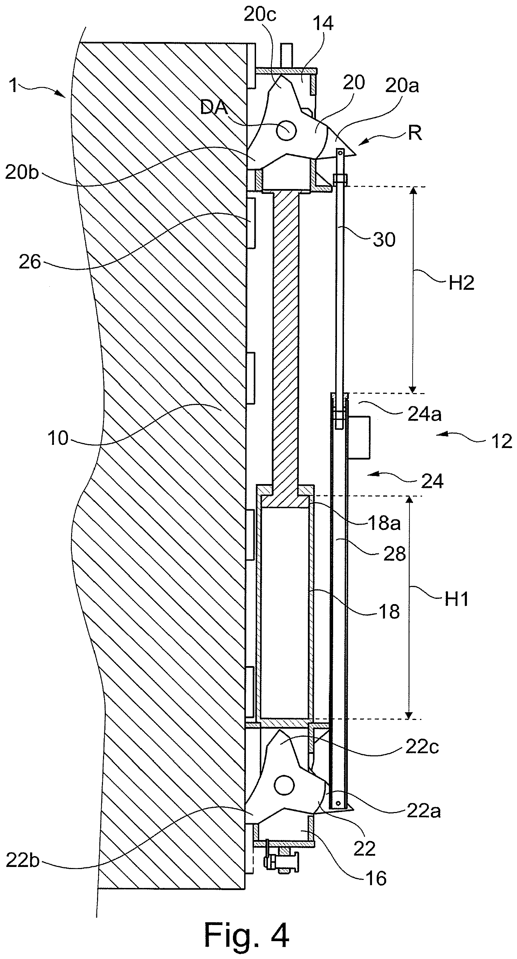

Fig. 4 zeigt eine schematische Darstellung eines Selbstklettersystems für einen Betonbaukörper gemäß der bevorzugten Ausführungsform der Erfindung. In der in Fig. 4 gezeigten Darstellung ist der Linearantrieb 18 in dessen erste axiale Endposition 18a, d.h. in eine vollständig ausgefahrene Position, gestellt.

Ein Hub H1 des Linearantriebs 18 ist dabei im Wesentlichen identisch zu einem Hub H2 der Steuerstange 24.

Alternativ kann der Hub H1 des Linearantriebs 18 beispielsweise eine Abweichung von bis zu 15% zu einem Hub H2 der Steuerstange 24 aufweisen.

Das Kletterwerk 12 ist bei Erreichen der ersten axialen Endposition 24a der Steuerstange 24 dazu ausgebildet, das in Kletterstellung angeordnete Stellelement 20 des ersten Kletterkopfes von der Kletterstellung in die Raststellung R zu bewegen.

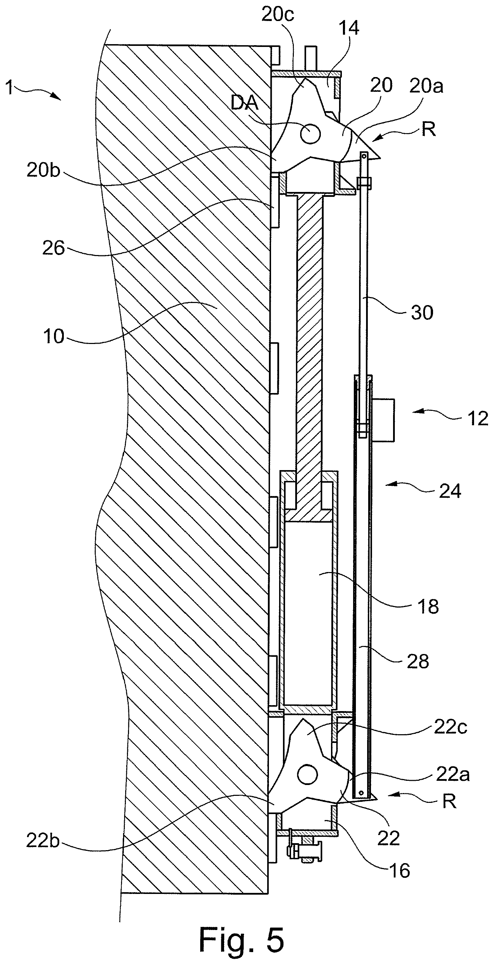

Fig. 5 zeigt eine schematische Darstellung eines Selbstklettersystems für einen Betonbaukörper gemäß der bevorzugten Ausführungsform der Erfindung. In der in Fig. 5 gezeigten Darstellung ist der Linearantrieb 18 gegenüber der in Fig. 4 gezeigten Darstellung etwas eingefahren, sodass das Stellelement 20 des ersten Kletterkopfes 14 nunmehr auf einem Rastklotz 26 aufliegt.

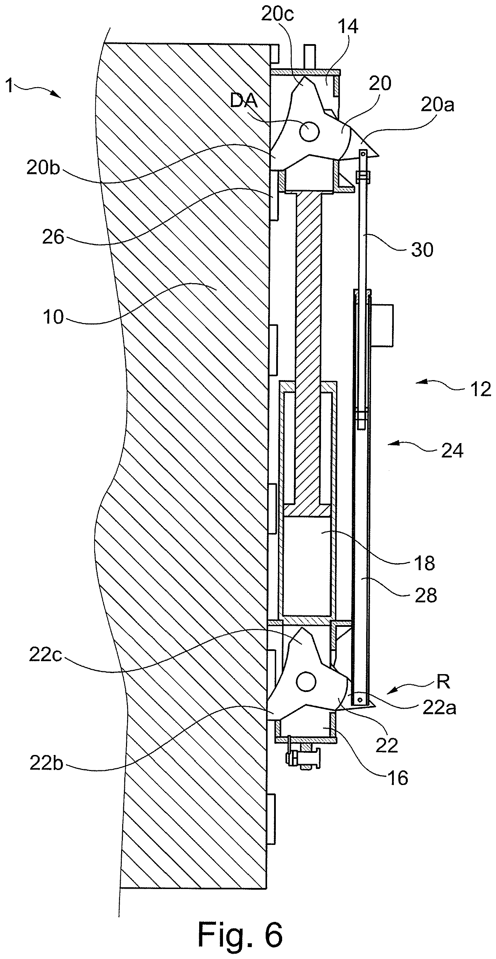

Fig. 6 zeigt eine schematische Darstellung eines Selbstklettersystems für einen Betonbaukörper gemäß der bevorzugten Ausführungsform der Erfindung. In der in Fig. 6 gezeigten Darstellung ist der Linearantrieb 18 gegenüber der in Fig. 5 gezeigten Darstellung etwas weiter eingefahren. Aufgrund des Aufliegens des Stellelements 20 des ersten Kletterkopfes 14 auf einem Rastklotz 26 wird somit das Stellelement 22 des zweiten Kletterkopfes 16 aufwärtsbewegt und ist in der gezeigten Darstellung noch immer in Raststellung angeordnet.

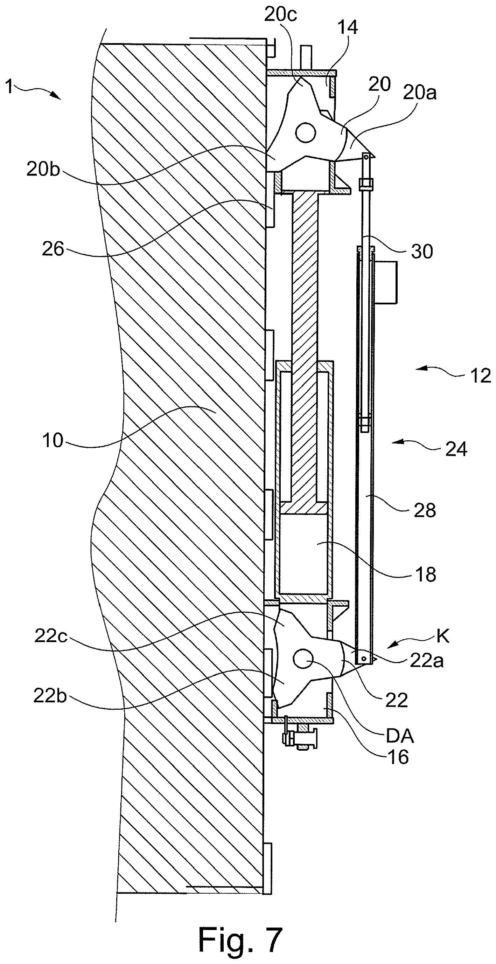

Fig. 7 zeigt eine schematische Darstellung eines Selbstklettersystems für einen Betonbaukörper gemäß der bevorzugten Ausführungsform der Erfindung. In der gezeigten Darstellung ist der Linearantrieb 18 im Vergleich zu der in Fig. 7 gezeigten Darstellung etwas weiter eingefahren. Durch das Überfahren des Rastklotzes 26 durch das Stellelement 22 des zweiten Kletterkopfes 16 wird das Stellelement 22 des zweiten Kletterkopfes 16 somit von der Raststellung R in die Kletterstellung K bewegt.

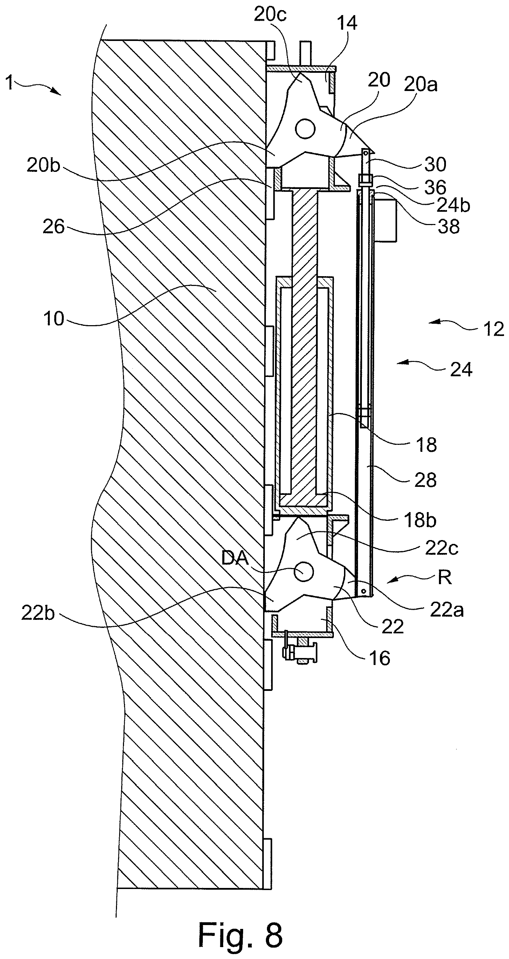

Fig. 8 zeigt eine schematische Darstellung eines Selbstklettersystems für einen Betonbaukörper gemäß der bevorzugten Ausführungsform der Erfindung. In der gezeigten Darstellung ist der Linearantrieb 18 in einer zweiten axialen Endposition 18b, insbesondere einer vollständig eingefahrenen Position, angeordnet.

Aufgrund der axial versetzen Anordnung der Steuerstange 24 im Vergleich zu dem Linearantrieb 18 wird das Stellelement 22 des zweiten Kletterkopfes 16 somit von der Kletterstellung in die Raststellung R bewegt.

Des Weiteren liegt die am Innenrohr 30 angeordnete Mutter 36, welche einen Anschlag bildet, an dem Gegenanschlag 38 des Außenrohrs 28 auf.

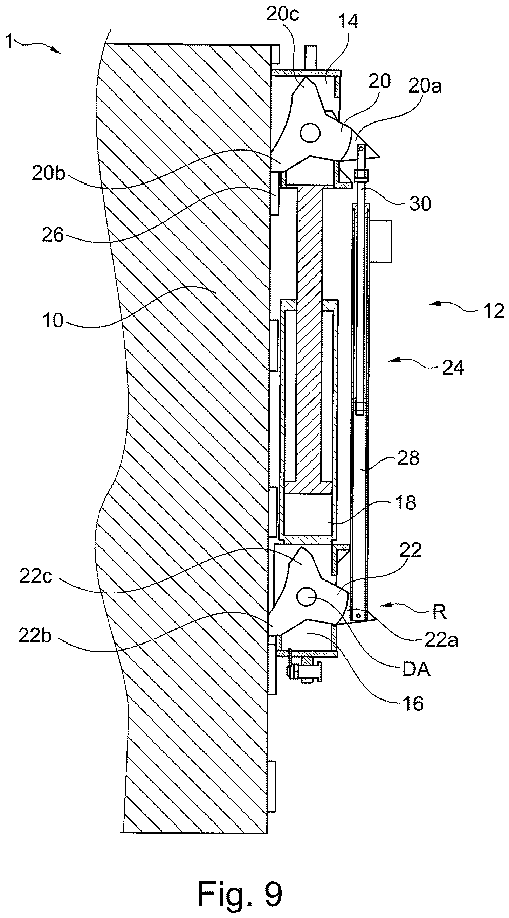

Fig. 9 zeigt eine schematische Darstellung eines Selbstklettersystems für einen Betonbaukörper gemäß der bevorzugten Ausführungsform der Erfindung. In der gezeigten Darstellung ist der Linearantrieb 18 gegenüber der in Fig. 8 gezeigten Darstellung etwas weiter ausgefahren. Dadurch liegt das Stellelement 22 des zweiten Kletterkopfes 16 auf einem Rastklotz 26 in Raststellung R auf.

Der in Fig. 1 bis Fig. 9 gezeigte Bewegungsablauf des Selbstklettersystems 1 ermöglicht somit in vorteilhafter Weise sowohl das Klettern der Kletterschiene als auch einer (in den Figuren nicht gezeigten) Konsole.

Im Falle des Kletterns der Konsole besteht der Unterschied, dass das Stellelement nun nicht mehr auf dem Rastklotz 26 aufliegt, sondern unter diesem liegt. Wenn man die Darstellungen spiegelt lässt sich das Klettern der Schiene darstellen.

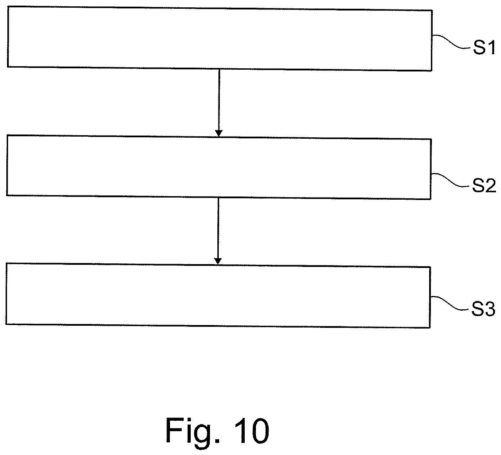

Fig. 10 zeigt ein Ablaufdiagramm eines Verfahrens zum Klettern eines Kletterwerks gemäß der bevorzugten Ausführungsform der Erfindung.

Das Verfahren zum Klettern des Kletterwerks 12 an einer an einem Betonbaukörper 2 angeordneten Kletterschiene umfasst ein Bereitstellen S1 eines ersten Kletterkopfes 14, eines zweiten Kletterkopfes 16 und eines den ersten Kletterkopf 14 mit dem zweiten Kletterkopf 16 verbindenden Linearantriebs 18.

Das Verfahren umfasst ferner ein Bereitstellen S2 des ersten Kletterkopfes 14 und des zweiten Kletterkopfes 16 mit jeweils einem zwischen einer Kletterstellung K und einer Raststellung R, insbesondere des Kletterwerks 12, stellbaren Stellelement 20, 22, wobei das Stellelement 20 des ersten Kletterkopfes 14 und das Stellelement 22 des zweiten Kletterkopfes 16 durch eine Steuerstange 24 verbunden sind.

Darüber hinaus umfasst das Verfahren ein Beaufschlagen S3 zumindest eines der Stellelemente 20, 22 mit einem Drehmoment D in vorgegebenen Positionen 18a, 18b des Linearantriebs 18 durch die Steuerstange 24.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargelegten Ausführungsformen abzudecken, sofern diese in den Schutzumfang der Erfindung fallen, welcher nur durch die beigefügten Ansprüche definiert wird.

### Bezugszeichenliste

- 1: Selbstklettersystem
- 2: Betonbaukörper
- 10: Kletterschiene
- 12: Kletterwerk
- 14: erster Kletterkopf
- 16: zweiter Kletterkopf
- 18: Linearantrieb
- 18a: erste axiale Endposition
- 18b: zweite axiale Endposition
- 20,22: Stellelemente
- 20a, 22a: erste Flanke
- 20b, 22b: zweite Flanke
- 20c, 22c: dritte Flanke
- 24: Steuerstange
- 24a: erste axiale Endposition
- 24b: zweite axiale Endposition
- 26: Rastklotz
- 28: Außenrohr
- 30: Innenrohr
- 32: Federelement
- 34: Außengewinde
- 36: Mutter
- 38: Gegenanschlag
- 40: Griff
- D: Drehmoment
- DA: Drehachse
- E: Ebene
- H1, H2: Hub
- K: Kletterstellung
- R: Raststellung
- S1 bis S3: Verfahrensschritte

## Patentansprüche

1. Selbstklettersystem (1) für einen Betonbaukörper (2), mit einer Kletterschiene (10) und einem entlang der Kletterschiene (10) axial verfahrbaren Kletterwerk (12), welches einen ersten Kletterkopf (14), einen zweiten Kletterkopf (16) und einen den ersten Kletterkopf (14) mit dem zweiten Kletterkopf (16) verbindenden Linearantrieb (18) aufweist, wobei der erste Kletterkopf (14) und der zweite Kletterkopf (16) jeweils ein zwischen einer Kletterstellung (K) und einer Raststellung (R), insbesondere des Kletterwerks (12), stellbares Stellelement (20, 22) aufweisen, **dadurch gekennzeichnet, dass** das Stellelement (20) des ersten Kletterkopfes (14) und das Stellelement (22) des zweiten Kletterkopfes (16) durch eine Steuerstange (24) verbunden sind, und dass die Steuerstange (24) dazu ausgebildet ist, in vorgegebenen Positionen (18a, 18b) des Linearantriebs (18) zumindest eines der Stellelemente (20, 22) mit einem Drehmoment (D) zu beaufschlagen.

2. Selbstklettersystem nach Anspruch 1, **dadurch gekennzeichnet, dass** das Stellelement (20) des ersten Kletterkopfes (14) und das Stellelement (22) des zweiten Kletterkopfes (16) bei durch Axialbewegung des Linearantriebs (18) bedingten Überfahrens eines Rastklotzes (26) einer Mehrzahl von auf der Kletterschiene (10) angeordneten Rastklötzen (26) von der Raststellung (R), in welcher das Stellelement (20, 22) zumindest abschnittsweise in der Ebene (E) des Rastklotzes (26) angeordnet ist, in die Kletterstellung (K), in welcher das Stellelement (20, 22) außerhalb der Ebene (E) des Rastklotzes (26) angeordnet ist, bewegbar ist.

3. Selbstklettersystem nach Anspruch 1 oder 2, **dadurch gekennzeichnet, dass** die Steuerstange (24) ein Außenrohr (28) und ein aus dem Außenrohr (28) ein- und ausfahrbares Innenrohr (30) oder eine Welle aufweist, wobei die Steuerstange (24) bei Bewegen des Linearantriebs (18) in eine erste axiale Endposition (18a), insbesondere in eine vollständig eingefahrene oder ausgefahrene Position, dazu ausgebildet ist, einen Schaltimpuls zu erzeugen um das in Kletterstellung (K) angeordnete Stellelement (20) des ersten Kletterkopfes (14) oder des zweiten Kletterkopfes (16) von der Kletterstellung (K) in die Raststellung (R) zu bewegen.

4. Selbstklettersystem nach Anspruch 3, **dadurch gekennzeichnet, dass** ein Hub (H1) des Linearantriebs (18) im Wesentlichen identisch oder mit einer Abweichung von bis zu 15% zu einem Hub (H2) der Steuerstange (24) ist, wobei das Kletterwerk (12) bei Erreichen einer ersten axialen Endposition (24a) der Steuerstange (24) dazu ausgebildet ist, das in Kletterstellung (K) angeordnete Stellelement (20) des ersten Kletterkopfes (14) oder des zweiten Kletterkopfes (16) von der Kletterstellung (K) in die Raststellung (R) zu bewegen.

5. Selbstklettersystem nach einem der vorhergehenden Ansprüche, **dadurch gekennzeichnet, dass** die Steuerstange (24) bei Bewegen des Linearantriebs (18) in eine zweite axiale Endposition (18b), insbesondere in eine vollständig eingefahrene Position, dazu ausgebildet ist, das in Kletterstellung (K) angeordnete Stellelement (20) des ersten Kletterkopfes (14) oder des zweiten Kletterkopfes (16) von der Kletterstellung (K) in die Raststellung (R) zu bewegen.

6. Selbstklettersystem nach Anspruch 4, **dadurch gekennzeichnet, dass** das Kletterwerk (12) bei Erreichen der zweiten axialen Endposition (24b) der Steuerstange (24) dazu ausgebildet ist, das in Kletterstellung (K) angeordnete Stellelement (20) des ersten Kletterkopfes (14) oder des zweiten Kletterkopfes (16) von der Kletterstellung (K) in die Raststellung (R) zu bewegen.

7. Selbstklettersystem nach einem der vorhergehenden Ansprüche, **dadurch gekennzeichnet, dass** das Stellelement (20) des ersten Kletterkopfes (14) und das Stellelement (22) des zweiten Kletterkopfes (16) an seiner Drehachse (DA) am jeweiligen Kletterkopf (14, 16) angeordnet ist, und wobei die Steuerstange (24) am jeweiligen Stellelement (20, 22) exzentrisch zur Drehachse angeordnet ist.

8. Selbstklettersystem nach einem der vorhergehenden Ansprüche, **dadurch gekennzeichnet, dass** das Kletterwerk (12) dazu ausgebildet ist, dass sich bei Betrieb des Kletterwerks (12) in Raststellung (R) das Stellelement (20, 22) des ersten Kletterkopfes (14) oder des zweiten Kletterkopfes (16) an einem an der Kletterschiene (10) angeordneten Rastklotz (26) abstützt, und wobei das andere Stellelement (20, 22) durch die Steuerstange (24) betätigbar ist.

9. Selbstklettersystem nach einem der Ansprüche 3, 4 und 6 oder, sofern auf den Anspruch 3 rückbezogen, nach einem der Ansprüche 5, 7 und 8, **dadurch gekennzeichnet, dass** das Außenrohr (28) und das Innenrohr (30) oder die Welle der Steuerstange (24) an einem Hubende ein Federelement (32), insbesondere eine Spiralfeder, aufweisen, welches die Betätigung des Stellelements (20, 22) des ersten Kletterkopfes (14) und/oder des zweiten Kletterkopfes (16) einleitet.

10. Selbstklettersystem nach Anspruch 9, **dadurch gekennzeichnet, dass** das Innenrohr (30), insbesondere am Hubende, zumindest abschnittsweise ein Außengewinde (34) aufweist, an dessen Ende eine Mutter (36) angeordnet ist, wobei die Mutter (36) einen Anschlag bildet, welcher an einem Gegenanschlag (38), insbesondere einer Durchmesserreduzierung, des Außenrohrs (28) anschlägt.

11. Selbstklettersystem nach einem der vorhergehenden Ansprüche, **dadurch gekennzeichnet, dass** die Steuerstange (24) einen Griff (40) aufweist, welcher bei Betätigung, insbesondere durch einen Benutzer, dazu ausgebildet ist, das Stellelement (20, 22) des ersten Kletterkopfes (14) oder des zweiten Kletterkopfes (16) zwischen Kletterstellung (K) und Raststellung (R) zu bewegen.

12. Selbstklettersystem nach einem der vorhergehenden Ansprüche, **dadurch gekennzeichnet, dass** der Linearantrieb durch einen Stellzylinder ausgebildet ist, welcher eine in einem Zylinder axial verstellbare Kolbenstange aufweist, wobei die Kolbenstange an einem axialen Endabschnitt mit dem ersten Kletterkopf (14) verbunden ist, und wobei der Zylinder an einem axialen Endabschnitt mit dem zweiten Kletterkopf (16) verbunden ist.

13. Selbstklettersystem nach einem der vorhergehenden Ansprüche, **dadurch gekennzeichnet, dass** das Stellelement (20) des ersten Kletterkopfes (14) und das Stellelement (22) des zweiten Kletterkopfes (16) jeweils im Wesentlichen sternförmig ausgebildet ist, wobei das Stellelement (20, 22) eine radial ausgerichtete erste Flanke (20a, 22a), eine radial ausgerichtete zweite Flanke (20b, 22b) und eine radial ausgerichtete dritte Flanke (20c, 22c) aufweist.

14. Selbstklettersystem nach Anspruch 13, **dadurch gekennzeichnet, dass** die Steuerstange (24) mit der ersten Flanke (20a, 22a) des Stellelements (20) des ersten Kletterkopfes (14) und des Stellelements (22) des zweiten Kletterkopfes (16) verbunden ist, und wobei die zweite Flanke (20b, 22b) der Stellelemente (20, 22) dazu ausgebildet ist, in der Raststellung (R) des Kletterwerks (12) auf dem Rastklotz (26) aufzuliegen.

15. Verfahren zum Klettern eines Kletterwerks (12) an einer an einem Betonbaukörper (2) angeordneten Kletterschiene (10), mit den Schritten:
Bereitstellen (S1) eines ersten Kletterkopfes (14), eines zweiten Kletterkopfes (16) und eines den ersten Kletterkopf (14) mit dem zweiten Kletterkopf (16) verbindenden Linearantriebs (18);
Bereitstellen (S2) des ersten Kletterkopfes (14) und des zweiten Kletterkopfes (16) mit jeweils einem zwischen einer Kletterstellung (K) und einer Raststellung (R), insbesondere des Kletterwerks (12), stellbaren Stellelement (20, 22), wobei das Stellelement (20) des ersten Kletterkopfes (14) und das Stellelement (22) des zweiten Kletterkopfes (16) durch eine Steuerstange (24) verbunden sind; und
Beaufschlagen (S3) zumindest eines der Stellelemente (20, 22) mit einem Drehmoment (D) in vorgegebenen Positionen (18a, 18b) des Linearantriebs (18) durch die Steuerstange (24).

16. Verfahren nach Anspruch 15, **dadurch gekennzeichnet, dass** das Stellelement (20) des ersten Kletterkopfes (14) und das Stellelement (22) des zweiten Kletterkopfes (16) bei durch Axialbewegung des Linearantriebs (18) bedingten Überfahrens eines Rastklotzes (26) einer Mehrzahl von auf der Kletterschiene (10) angeordneten Rastklötzen (26) von der Raststellung (R), in welcher das Stellelement (20, 22) zumindest abschnittsweise in der Ebene (E) des Rastklotzes (26) angeordnet ist, in die Kletterstellung (K), in welcher das Stellelement (20, 22) außerhalb der Ebene (E) des Rastklotzes (26) angeordnet ist, bewegt wird.

17. Verfahren nach Anspruch 15 oder 16, **dadurch gekennzeichnet, dass** die Steuerstange (24) bei Bewegen des Linearantriebs (18) in eine erste axiale Endposition (18a), insbesondere in eine vollständig ausgefahrene Position einen Schaltimpuls erzeugt um das in Kletterstellung (K) angeordnete Stellelement (20) des ersten Kletterkopfes (14) oder des zweiten Kletterkopfes (16) von der Kletterstellung (K) in die Raststellung (R) zu bewegen.

## Claims

1. Self-climbing system (1) for a concrete structural body (2), having a climbing rail (10) and having a climbing unit (12) which is axially movable along the climbing rail (10) and which has a first climbing head (14), a second climbing head (16), and a linear drive (18) connecting the first climbing head (14) to the second climbing head (16), wherein the first climbing head (14) and the second climbing head (16) each have an actuating element (20, 22) which is adjustable between a climbing position (K) and a latching position (R), in particular of the climbing unit (12), **characterized in that** the actuating element (20) of the first climbing head (14) and the actuating element (22) of the second climbing head (16) are connected by a control rod (24), and that the control rod (24) is designed, in predetermined positions (18a, 18b) of the linear drive (18), to apply a torque (D) to at least one of the actuating elements (20, 22).

2. Self-climbing system according to claim 1, **characterized in that** the actuating element (20) of the first climbing head (14) and the actuating element (22) of the second climbing head (16), when passing over a latching block (26) of a plurality of latching blocks (26) arranged on the climbing rail (10) caused by axial movement of the linear drive (18), is movable from the latching position (R) in which the actuating element (20, 22) is arranged at least in portions in the plane (E) of the latching block (26) to the climbing position (K) in which the actuating element (20, 22) is arranged outside the plane (E) of the latching block (26).

3. Self-climbing system according to claim 1 or 2, **characterized in that** the control rod (24) has an outer tube (28) and an inner tube (30) or shaft which can be retracted and extended from the outer tube (28), wherein the control rod (24), when moving the linear drive (18) to a first axial end position (18a), in particular to a fully retracted or extended position, is designed to generate a switching pulse in order to move the actuating element (20) of the first climbing head (14) or of the second climbing head (16) which is arranged in the climbing position (K) from the climbing position (K) to the latching position (R).

4. Self-climbing system according to claim 3, **characterized in that** a stroke (H1) of the linear drive (18) is substantially identical with or with a deviation of up to 15% to a stroke (H2) of the control rod (24), wherein the climbing unit (12), upon reaching a first axial end position (24a) of the control rod (24), is designed to move the actuating element (20) of the first climbing head (14) or of the second climbing head (16) which is arranged in the climbing position (K) from the climbing position (K) to the latching position (R).

5. Self-climbing system according to any of the preceding claims, **characterized in that** when the linear drive (18) is moved to a second axial end position (18b), in particular to a fully retracted position, the control rod (24) is designed to move the actuating element (20) of the first climbing head (14) or of the second climbing head (16) which is arranged in the climbing position (K) from the climbing position (K) to the latching position (R).

6. Self-climbing system according to claim 4, **characterized in that**, when the second axial end position (24b) of the control rod (24) is reached, the climbing unit (12) is designed to move the actuating element (20) of the first climbing head (14) or of the second climbing head (16) which is arranged in the climbing position (K) from the climbing position (K) to the latching position (R).

7. Self-climbing system according to any of the preceding claims, **characterized in that** the actuating element (20) of the first climbing head (14) and the actuating element (22) of the second climbing head (16) are arranged on its axis of rotation (DA) on the respective climbing head (14, 16), and wherein the control rod (24) is arranged on the respective actuating element (20, 22) eccentrically to the axis of rotation.

8. Self-climbing system according to any of the preceding claims, **characterized in that** the climbing unit (12) is designed in such a manner that, when the climbing unit (12) is operated in the latching position (R), the actuating element (20, 22) of the first climbing head (14) or of the second climbing head (16) is supported on a latching block (26) arranged on the climbing rail (10), and wherein the other actuating element (20, 22) can be actuated by the control rod (24).

9. Self-climbing system according to any of claims 3, 4, and 6 or, insofar as referring back to claim 3, according to any of claims 5, 7, and 8, **characterized in that** the outer tube (28) and the inner tube (30) or the shaft of the control rod (24) have a spring element (32), in particular a spiral spring, at one stroke end, which initiates the actuation of the actuating element (20, 22) of the first climbing head (14) and/or of the second climbing head (16).

10. Self-climbing system according to claim 9, **characterized in that** the inner tube (30), in particular at the stroke end, has at least in portions an external thread (34), at the end of which a nut (36) is arranged, wherein the nut (36) forms a stop which abuts against a counter stop (38), in particular a diameter reduction, of the outer tube (28).

11. Self-climbing system according to any of the preceding claims, **characterized in that** the control rod (24) has a handle (40) which, when actuated, in particular by a user, is designed to move the actuating element (20, 22) of the first climbing head (14) or of the second climbing head (16) between the climbing position (K) and the latching position (R).

12. Self-climbing system according to any of the preceding claims, **characterized in that** the linear drive is formed by an actuating cylinder which has a piston rod axially adjustable in a cylinder, wherein the piston rod is connected at an axial end portion to the first climbing head (14), and wherein the cylinder is connected at an axial end portion to the second climbing head (16).

13. Self-climbing system according to any of the preceding claims, **characterized in that** the actuating element (20) of the first climbing head (14) and the actuating element (22) of the second climbing head (16) are each designed to be substantially star-shaped, wherein the actuating element (20, 22) has a radially aligned first flank (20a, 22a), a radially aligned second flank (20b, 22b), and a radially aligned third flank (20c, 22c).

14. Self-climbing system according to claim 13, **characterized in that** the control rod (24) is connected to the first flank (20a, 22a) of the actuating element (20) of the first climbing head (14) and of the actuating element (22) of the second climbing head (16), and wherein the second flank (20b, 22b) of the actuating elements (20, 22) is designed to rest on the latching block (26) in the latching position (R) of the climbing unit (12).

15. Method for climbing of a climbing unit (12) on a climbing rail (10) arranged on a concrete structural body (2), comprising the steps:
providing (S1) a first climbing head (14), a second climbing head (16), and a linear drive (18) connecting the first climbing head (14) to the second climbing head (16);
providing (S2) the first climbing head (14) and the second climbing head (16) each with an actuating element (20, 22) adjustable between a climbing position (K) and a latching position (R), in particular of the climbing unit (12), wherein the actuating element (20) of the first climbing head (14) and the actuating element (22) of the second climbing head (16) are connected by a control rod (24); and
applying (S3) a torque (D) to at least one of the actuating elements (20, 22) in predetermined positions (18a, 18b) of the linear drive (18) by the control rod (24).

16. Method according to claim 15, **characterized in that** the actuating element (20) of the first climbing head (14) and the actuating element (22) of the second climbing head (16), when passing over a latching block (26) of a plurality of latching blocks (26) arranged on the climbing rail (10) caused by axial movement of the linear drive (18), is moved from the latching position (R) in which the actuating element (20, 22) is arranged at least in portions in the plane (E) of the latching block (26) to the climbing position (K) in which the actuating element (20, 22) is arranged outside the plane (E) of the latching block (26).

17. Method according to claim 15 or 16, **characterized in that** when the linear drive (18) is moved to a first axial end position (18a), in particular to a fully extended position, the control rod (24) generates a switching pulse to move the actuating element (20) of the first climbing head (14) or of the second climbing head (16) which is arranged in the climbing position (K) from the climbing position (K) to the latching position (R).

## Revendications

1. Système auto-grimpant (1) pour un corps structural en béton (2), comportant un rail de montée (10) et une unité de montée (12) axialement déplaçable le long du rail de montée (10), cette dernière comporte une première tête de montée (14), une seconde tête de montée (16) et un entraînement linéaire (18) reliant la première tête de montée (14) et la seconde tête de montée (16), dans lequel la première tête de montée (14) et la seconde tête de montée (16) comportent respectivement un élément de réglage (20, 22) réglable entre une position de montée (K) et une position de blocage (R), en particulier de l'unité de montée (12), **caractérisé en ce que** l'élément de réglage (20) de la première tête de montée (14) et l'élément de réglage (22) de la seconde tête de montée (16) sont reliés par une tige de commande (24), et **en ce que** la tige de commande (24) est conçue pour appliquer un couple (D) à au moins un des éléments de réglage (20, 22) dans des positions prédéterminées (18a, 18b) de l'entraînement linéaire (18).

2. Système auto-grimpant selon la revendication 1, **caractérisé en ce que**, lors d'un passage sur un bloc de blocage (26) parmi une pluralité de blocs de blocage (26) agencés sur le rail de montée (10) provoqué par un mouvement axial de l'entraînement linéaire (18), l'élément de réglage (20) de la première tête de montée (14) et l'élément de réglage (22) de la seconde tête de montée (16) peuvent être déplacés de la position de blocage (R), dans laquelle l'élément de réglage (20, 22) est agencé, au moins dans certaines zones, dans le plan (E) du bloc de blocage (26), jusqu'à la position de montée (K), dans laquelle l'élément de réglage (20, 22) est agencé à l'extérieur du plan (E) du bloc de blocage (26).

3. Système auto-grimpant selon la revendication 1 ou 2, **caractérisé en ce que** la tige de commande (24) comporte un tube extérieur (28) et un tube intérieur (30) pouvant être rentré et sorti du tube extérieur (18) ou un arbre, dans lequel lorsque l'entraînement linéaire (28) est déplacé jusqu'à une première position finale axiale (18a), en particulier jusqu'à une position entièrement rentrée ou sortie, la tige de commande (24) est conçue pour générer une impulsion de basculement afin de déplacer l'élément de réglage (20) de la première tête de montée (14) ou de la seconde tête de montée (16) agencé en position de montée (K), de la position de montée (K) à la position de blocage (R).

4. Système auto-grimpant selon la revendication 3, **caractérisé en ce qu'**une course (H1) de l'entraînement linéaire (18) est sensiblement identique ou présente un écart allant jusqu'à 15 % par rapport à une course (H2) de la tige de commande (24), dans lequel lorsqu'une première position finale axiale (24a) de la tige de commande (24) est atteinte, l'unité de montée (12) est conçue pour déplacer l'élément de réglage (20) de la première tête de montée (14) ou de la seconde tête de montée (16) agencé en position de montée (K), de la position de montée (K) à la position de blocage (R).

5. Système auto-grimpant selon l'une des revendications précédentes, **caractérisé en ce que** lorsque l'entraînement linéaire (14) est déplacé jusqu'à une seconde position finale axiale (18b), en particulier jusqu'à une position entièrement rentrée, la tige de commande (24) est conçue pour déplacer l'élément de réglage (20) de la première tête de montée (14) ou de la seconde tête de montée (16) agencé en position de montée (K), de la position de montée (K) à la position de blocage (R).

6. Système auto-grimpant selon la revendication 4, **caractérisé en ce que** lorsque la seconde position finale axiale (24a) de la tige de commande (24) est atteinte, l'unité de montée (12) est conçue pour déplacer l'élément de réglage (20) de la première tête de montée (14) ou de la seconde tête de montée (16) agencé en position de montée (K), de la position de montée (K) à la position de blocage (R).

7. Système auto-grimpant selon l'une des revendications précédentes, **caractérisé en ce que** l'élément de réglage (20) de la première tête de montée (14) et l'élément de réglage (22) de la seconde tête de montée (16) sont agencés sur leur axe de rotation (DA) sur la tête de montée (14, 16) respective, et dans lequel la tige de commande (24) sur l'élément de réglage (20, 22) respectif est agencée de manière excentrée par rapport à l'axe de rotation.

8. Système auto-grimpant selon l'une des revendications précédentes, **caractérisé en ce que** l'unité de montée (12) est conçue de telle sorte que l'élément de réglage (20, 22) de la première tête de montée (14) ou de la seconde tête de montée (16) sur un bloc de blocage (26) agencé sur le rail de montée (22) est supporté lorsque l'unité de montée (12) fonctionne dans la position de blocage (R), et dans lequel l'autre élément de réglage (20, 22) peut être actionné par la tige de commande (24).

9. Système auto-grimpant selon l'une des revendications 3, 4 et 6 ou, lorsque dépendante de la revendication 3, selon l'une des revendications 5, 7 et 8, **caractérisé en ce que** le tube extérieur (28) et le tube intérieur (30) ou l'arbre de la tige de commande (24) comporte un élément à ressort (32), en particulier un ressort hélicoïdal, sur une fin de course qui déclenche l'actionnement de l'élément de réglage (20, 22) de la première tête de montée (14) et/ou de la seconde tête de montée (16).

10. Système auto-grimpant selon la revendication 9, **caractérisé en ce que** le tube intérieur (30) comporte, en particulier sur une fin de course, un filetage extérieur (34) au moins dans certaines zones, à l'extrémité duquel est agencé un écrou (36), dans lequel l'écrou (36) forme une butée qui vient en butée contre une contre-butée (38), en particulier une réduction de diamètre, du tube extérieur (28).

11. Système auto-grimpant selon l'une des revendications précédentes, **caractérisé en ce que** la tige de commande (24) comporte une poignée (40) qui, lorsqu'elle est actionnée, en particulier par un utilisateur, est conçue pour déplacer l'élément de réglage (20, 22) de la première tête de montée (14) ou de la seconde tête de montée (16) entre la position de montée (K) et la position de blocage (R).

12. Système auto-grimpant selon l'une des revendications précédentes, **caractérisé en ce que** l'entraînement linéaire est formé par un vérin de réglage qui comporte une tige de piston axialement réglable dans un cylindre, dans lequel la tige de piston est reliée, au niveau d'une partie d'extrémité axiale, à la première tête de montée (14), et dans lequel le cylindre est relié, au niveau d'une partie d'extrémité axiale, à la seconde tête de montée (16).

13. Système auto-grimpant selon l'une des revendications précédentes, **caractérisé en ce que** l'élément de réglage (20) de la première tête de montée (14) et l'élément de réglage (22) de la seconde tête de montée (16) sont chacun sensiblement en forme d'étoile, dans lequel l'élément de réglage (20, 22) comporte un premier flanc (20a, 22a) aligné radialement, un deuxième flanc (20b, 22b) aligné radialement et un troisième flanc (20c, 22c) aligné radialement.

14. Système auto-grimpant selon la revendication 13, **caractérisé en ce que** la tige de commande (24) est reliée au premier flanc (20a, 22a) de l'élément de réglage (20) de la première tête de montée (14) et de l'élément de réglage (22) de la seconde tête de montée (16), et dans lequel le deuxième flanc (20b, 22b) des éléments de réglage (20, 22) est conçu pour reposer sur le bloc de blocage (26) dans la position de blocage (R) de l'unité de montée (12).

15. Procédé pour faire monter une unité de montée (12) sur un rail de montée (10) agencé sur un corps structural en béton (2), comportant les étapes consistant à :
fournir (S1) une première tête de montée (14), une seconde tête de montée (16) et un entraînement linéaire (18) reliant la première tête de montée (14) et la seconde tête de montée (16) ;
fournir (S2) la première tête de montée (14) et la seconde tête de montée (16) avec un élément de réglage (20, 22) respectivement réglable entre une position de montée (K) et une position de blocage (R), en particulier de l'unité de montée (12), dans lequel l'élément de réglage (20) de la première tête de montée (14) et l'élément de réglage (22) de la seconde tête de montée (16) sont reliés par une tige de commande (24) ; et
appliquer, par l'intermédiaire de la tige de commande (24), un couple (D) à au moins un des éléments de réglage (20, 22) dans des positions prédéterminées (18a, 18b) de l'entraînement linéaire (18).

16. Procédé selon la revendication 15, **caractérisé en ce que**, lors d'un passage sur un bloc de blocage (26) parmi une pluralité de blocs de blocage (26) agencés sur le rail de montée (10) provoqué par un mouvement axial de l'entraînement linéaire (18), l'élément de réglage (20) de la première tête de montée (14) et l'élément de réglage (22) de la seconde tête de montée (16) sont déplacés de la position de blocage (R), dans laquelle l'élément de réglage (20, 22) est agencé, au moins dans certaines zones, dans le plan (E) du bloc de blocage (26), jusqu'à la position de montée (K), dans laquelle l'élément de réglage (20, 22) est agencé à l'extérieur du plan (E) du bloc de blocage (26).

17. Procédé selon la revendication 15 ou 16, **caractérisé en ce que** lorsque l'entraînement linéaire (14) est déplacé jusqu'à une première position finale axiale (18a), en particulier jusqu'à une position entièrement sortie, la tige de commande (24) génère une impulsion de basculement afin de déplacer l'élément de réglage (20) de la première tête de montée (14) ou de la seconde tête de montée (16) agencé en position de montée (K), de la position de montée (K) à la position de blocage (R).
